# EUROPEAN PATENT APPLICATION

(11) **EP 2 530 343 A1**
(43) Date of publication of application: **05.12.2012**
(21) Application number: 12169095.2
(22) Date of filing: 23.05.2012
(51) Int. Cl.: F16D 1/116

(54) **Coupling structure and steering device**

(30) Priority: 02.06.2011 JP 2011124467
(71) Applicant: JTEKT CORPORATION, Osaka-shi Osaka 542-8502 (JP)
(72) Inventor: Yamakawa, Tomonari, Osaka-shi,, Osaka 542-8502 (JP)
(74) Representative: Winter, Brandl, Fürniss, Hübner, Röss, Kaiser, Polte - Partnerschaft

(57) **Abstract**

In a coupling structure for coupling a middle shaft (12) that may function as a first rotary member to an input shaft (13) that may function as a second rotary member such that torque is transmittable therebetween, a snap ring (26) is engaged with both a first engagement groove (24) of a cylindrical member (18) and a second engagement groove (25) of a shaft portion (21) to restrict axial movement of the input shaft (13) relative to the middle shaft (12). The first and second engagement grooves (24, 25) are formed such that the snap ring (26) is disengaged from the first engagement groove (24) when a load higher than or equal to a predetermined load is applied to the middle shaft (12) and the input shaft (13) in the separating direction. There is provided a separation nut (42) that is fitted to a threaded portion formed on the shaft portion (21) and that rotates and moves toward middle shaft (12) to push the middle shaft (12).

## Description

### BACKGROUND OF THE INVENTION

### 1. Field of the Invention

The invention relates to a coupling structure and a steering device.

### 2. Discussion of Background

There is a conventional coupling structure for coupling a first rotary member that has a cylindrical portion and a second rotary member that has a shaft portion that is fitted in the cylindrical portion such that torque is transmittable between the first member rotary member and the second rotary member. The coupling structure restricts relative axial movement between the first rotary member and the second rotary member to prevent the first rotary member and the second rotary member from being separated from each other.

For example, with a coupling structure described in Japanese Patent Application Publication No. 9-295517 (JP 9-295517 A), a propeller shaft (second rotary member) is serration-fitted to an inner ring (first rotary member) of a constant velocity joint. Thus, the propeller shaft and the inner ring are coupled to each other such that torque is transmittable therebetween. Then, a snap ring is engaged with both of the engagement grooves respectively formed in the inner peripheral surface of the inner ring and the outer peripheral surface of the propeller shaft to restrict axial movement of the propeller shaft relative to the inner ring.

The side face of the engagement groove of the inner ring is formed in a tapered shape. When an axial load that is higher than or equal to a predetermined load acts on the propeller shaft due to, for example, a collision of a vehicle, the side face reduces the diameter of the snap ring. Then, the snap ring is disengaged from the engagement groove of the inner ring so that axial movement of the propeller shaft relative to the inner ring is allowed.

The above-described coupling structure is applicable also to, for example, a column shaft that is formed by coupling a plurality of shafts to each other. A variable transmission ratio device that adjusts a steering gear ratio, as described in Japanese Patent Application Publication No. 2009-035189 (JP 2009-035189 A), may be provided at an intermediate portion of the above-described column shaft, and an input shaft of the variable transmission ratio device needs to be separated, for example, at the time of replacement of the variable transmission ratio device.

With the structure described in JP 9-295517 A, the propeller shaft and the inner ring may be separated from each other by applying an axial load to the propeller shaft. However, a structure for applying the axial load is not described at all in JP 9-295517 A. Therefore, with the above-described conventional structure, it is difficult to separate the second rotary member from the first rotary member, and there is an inconvenience that the efficiency of a work for the separation is low. Particularly, such an inconvenience becomes prominent in the case of components, such as a column shaft, that are mounted in a limited space in a vehicle.

### SUMMARY OF THE INVENTION

The invention provides a coupling structure and a steering device that improve the efficiency of a work for separating a first rotary member and a second rotary member from each other.

According to a feature of an example of the invention, a separation nut is rotated and moved toward a first rotary member to press the first rotary member. Thus, it is possible to easily apply a load to the first and second rotary members in such a direction that the first and second rotary members are separated from each other. Thus, it is possible to improve the efficiency of a work for separating the first rotary member and the second rotary member from each other.

According to another feature of an example of the invention, an elastic member is provided between the separation nut and the first rotary member while being compressed in an axial direction.

According to a further feature of an example of the invention, a restricting portion is formed so as to restrict rotation and movement of the separation nut in a direction away from the first rotary member.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a partially cutaway view that shows the schematic structure of portions near a column shaft in a steering device according to a first embodiment of the invention;
FIG. 2 is an enlarged sectional view that shows a coupling structure for coupling a middle shaft and an input shaft to each other according to the first embodiment;
FIG. 3 is a graph that shows a change in a load required at the time of coupling the middle shaft and the input shaft to each other and a change in a load required at the time of separating the middle shaft and the input shaft from each other;
FIG. 4 is an enlarged sectional view that shows a coupling structure for coupling a middle shaft and an input shaft to each other according to a second embodiment of the invention;
FIG. 5 is an enlarged sectional view of portions near engagement grooves according to a third embodiment of the invention;
FIG. 6 is a cross-sectional view of a middle shaft and an input shaft according to a fourth embodiment of the invention; and
FIG. 7 is an enlarged sectional view of portions near engagement grooves according to a fifth embodiment of the invention.

### DETAILED DESCRIPTION OF EMBODIMENTS

Hereafter, embodiments of the invention will be described with reference to the accompanying drawings.

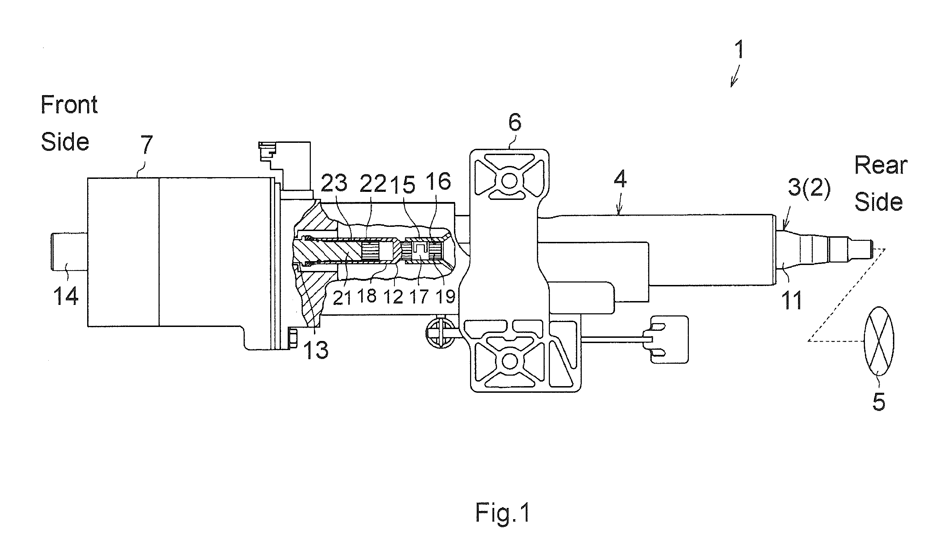

As shown in FIG. 1, in a steering device 1, a column shaft 3 that constitutes a steering shaft 2 is rotatably accommodated in a column jacket 4. A steering wheel 5 is fixed to a rear-side (right-side in FIG. 1) end portion of the column shaft 3 (the rear-side end portion is an end portion closer to the rear of a vehicle than a front-side end portion). In addition, an intermediate shaft is coupled to the front-side (left-side in FIG. 1) end portion of the column shaft 3 via a universal joint (not shown). Rotation (steering torque) resulting from a steering operation is transmitted to a steered mechanism, such as a rack and pinion mechanism. As a result, the steered angle (tire angle) of steered wheels is changed. Note that the column jacket 4 is fixed to a vehicle body (not shown) with a bracket 6.

The steering device 1 includes a variable transmission ratio device 7 that adjusts the ratio of the steered angle (tire angle) of the steered wheels to the steering angle of the steering wheel 5, that is, the transmission ratio (steering gear ratio). The variable transmission ratio device 7 is provided at an intermediate portion of the column shaft 3, and is fixed to the column jacket 4. The column shaft 3 according to the present embodiment is formed of an upper shaft 11, a middle shaft 12, and an input shaft 13 and an output shaft 14 of the variable transmission ratio device 7. The steering wheel 5 is fixed to the upper shaft 11. The middle shaft 12 is coupled to the upper shaft 11. The input shaft 13 of the variable transmission ratio device 7 is coupled to the middle shaft 12.

The upper shaft 11 and the middle shaft 12 are coupled to each other such that torque is transmittable therebetween. A coupling end portion 15 of the upper shaft 11, which is coupled to the middle shaft 12, is formed in a cylindrical shape, and has serrations 16 on its inner peripheral surface. The middle shaft 12 has a shaft-shaped fitting portion 17 and a cylindrical portion 18. The fitting portion 17 is fitted in the coupling end portion 15 of the upper shaft 11. The cylindrical portion 18 opens toward the front of the vehicle. Further, serrations 19 are formed on the outer peripheral surface of the fitting portion 17. When the fitting portion 17 is serration-fitted to the coupling end portion 15, the middle shaft 12 and the upper shaft 11 are coupled to each other such that torque is transmittable therebetween.

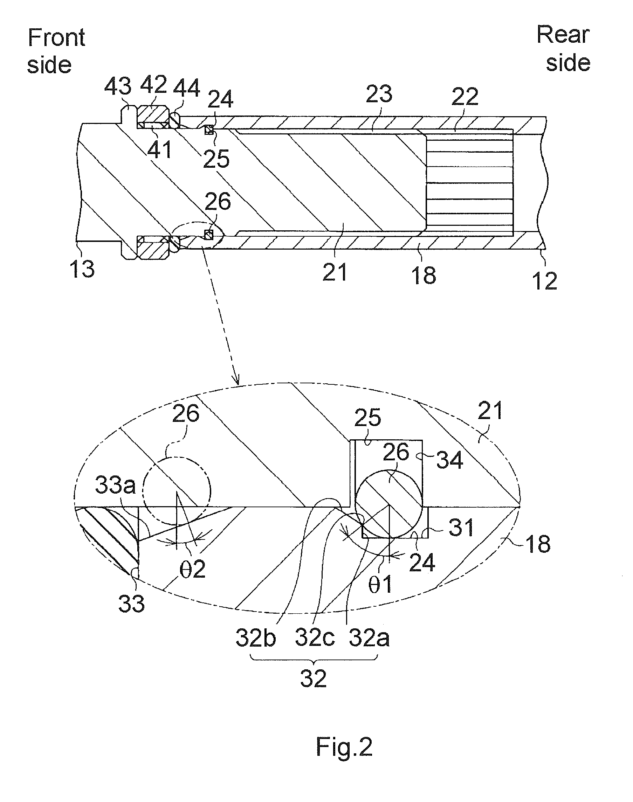

Next, a coupling structure for coupling the middle shaft and the input shaft to each other will be described in detail. The middle shaft 12 that may function as a first rotary member and the input shaft 13 that may function as a second rotary member are coupled to each other such that torque is transmittable therebetween. Specifically, as shown in FIG. 2, the input shaft 13 has a shaft portion 21 having a circular cross section. The shaft portion 21 is fitted in the cylindrical portion 18 of the middle shaft 12. Serrations 22 and serrations 23 are formed on the inner peripheral surface of the cylindrical portion 18 and the outer peripheral surface of the shaft portion 21, respectively. When the shaft portion 21 is serration-fitted to the cylindrical portion 18, the middle shaft 12 and the input shaft 13 are coupled to each other such that torque is transmittable therebetween.

In addition, the middle shaft 12 and the input shaft 13 are coupled to each other such that relative axial movement is restricted by a snap ring 26. The snap ring 26 engages with a first engagement groove 24 and a second engagement groove 25. The first engaging groove 24 is formed in the inner peripheral surface of the cylindrical portion 18. The second engagement groove 25 is formed in the outer peripheral surface of the shaft portion 21. Further, the first engagement groove 24 and the second engagement groove 25 are formed such that the snap ring 26 is disengaged from the first engagement groove 24 when a load higher than or equal to a predetermined load acts in such a direction that the middle shaft 12 and the input shaft 13 are separated from each other.

The snap ring 26 is formed in a C-shape, and increases or reduces its diameter by an elastic deformation. In the present embodiment, the cross section of the snap ring 26 is circular.

The first engagement groove 24 is formed in an annular shape, and is formed at a position forward of the serrations 22. The depth of the first engagement groove 24 is smaller than the diameter of the cross section of the snap ring 26. The snap ring 26 protrudes from the inner peripheral surface of the cylindrical portion 18 when the snap ring 26 is in contact with a bottom face 31 of the first engagement groove 24. The second engagement groove 25 is formed in an annular shape, and is formed at a position forward of the serrations 23. The depth of the second engagement groove 25 is larger than the diameter of the cross section of the snap ring 26. The snap ring 26 may be accommodated in the second engagement groove 25. The snap ring 26 is arranged in the first and second engagement grooves 24 and 25 with the diameter of the snap ring 26 reduced from that in a free state. Thus, the snap ring 26 is engaged with both the first and second engagement grooves 24 and 25. In this way, axial movement of the input shaft 13 relative to the middle shaft 12 is restricted, and the input shaft 13 is prevented from coming out of the middle shaft 12.

A front-side side face 32 of the first engagement groove 24 is formed of an orthogonal face 32a and a tapered separation taper face 32b. The orthogonal face 32a extends from the bottom face 31 in a direction orthogonal to the axial direction. The separation taper face 32b reduces in diameter from the orthogonal face 32a toward the front of the vehicle. A boundary portion 32c between the orthogonal face 32a and the separation taper face 32b is formed so as to be in contact with the snap ring 26. Thus, when a load in such a direction that the middle shaft 12 and the input shaft 13 are separated from each other (hereinafter, referred to as "separating direction" where appropriate) acts on the middle shaft 12 and the input shaft 13 (a load toward the rear of the vehicle acts on the middle shaft 12), a component force corresponding to a contact angle θ1, at which the snap ring 26 contacts the boundary portion 32c, acts on the snap ring 26, and the diameter of the snap ring 26 is reduced. When a load higher than or equal to the predetermined load acts in the separating direction, and the snap ring 26 is accommodated in the second engagement groove 25 and is disengaged from the first engagement groove 24. In this way, it is possible to separate the middle shaft 12 and the input shaft 13 from each other. Note that the predetermined load is a load that is required for the side face 32 (boundary portion 32c) to reduce the diameter of the snap ring 26 and push the snap ring 26 into the second engagement groove 25. The predetermined load increases as the contact angle increases.

In addition, an end face 33 of the cylindrical portion 18 has a tapered coupling taper face 33a that reduces in diameter toward the rear of the vehicle. Note that a contact angle θ2 at which the coupling taper face 33a contacts the snap ring 26 is smaller than the contact angle θ1 at which the snap ring 26 contacts the boundary portion 32c.

For example, at the time of replacement of the variable transmission ratio device 7, in order to separate the middle shaft 12 and the input shaft 13 from each other, a load in such a direction that the middle shaft 12 and the input shaft 13 are separated from each other needs to be applied to the middle shaft 12 and the input shaft 13.

On the basis of this, a threaded portion 41 is formed on the outer peripheral surface of the shaft portion 21 of the input shaft 13 at a position forward of the second engagement groove 25, and a separation nut 42 is fitted to the threaded portion 41. In addition, an annular restricting portion 43 is formed on the shaft portion 21. The restricting portion 43 extends radially outward and is located next to and forward of the threaded portion 41. Note that the separation nut 42 is fitted so as to be fastened to the restricting portion 43.

Furthermore, an annular elastic member 44 made of rubber material is arranged, in a compressed state, between the separation nut 42 and the cylindrical portion 18. Thus, the middle shaft 12 and the input shaft 13 are pushed by the elastic force of the elastic member 44 in the separating direction, and the snap ring 26 is in contact with the side face 32 of the first engagement groove 24 and a side face 34 of the second engagement groove 25.

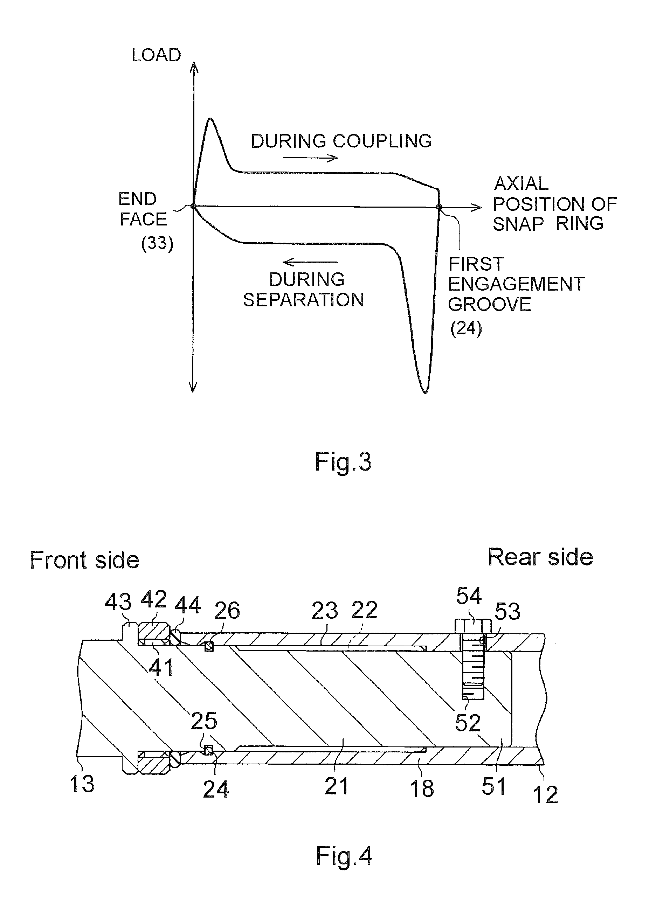

Next, a work for coupling the middle shaft and the input shaft to each other and a work for separating the middle shaft and the input shaft from each other will be described.
In the coupling work, the shaft portion 21 of the input shaft 13 is inserted into the cylindrical portion 18 of the middle shaft 12 with the snap ring 26 engaged with the second engagement groove 25, and then a load in such a direction that the middle shaft 12 and the input shaft 13 are coupled to each other (hereinafter, referred to as "coupling direction" where appropriate) is applied to the middle shaft 12 and the input shaft 13 with the snap ring 26 in contact with the coupling taper face 33a. Thus, the snap ring 26 is reduced in diameter by the coupling taper face 33a and is accommodated in the second engagement groove 25. As a result, a portion of the shaft portion 21, at which the second engagement groove 25 is formed, is inserted in the cylindrical portion 18. Then, when the shaft portion 21 is inserted into the cylindrical portion 18, up to a position at which the second engagement groove 25 faces the first engagement groove 24, the snap ring 26 increases in diameter and engages with the first engagement groove 24. In this way, coupling of the middle shaft 12 and the input shaft 13 to each other is completed. Note that, after the snap ring 26 is entirely accommodated in the second engagement groove 25, it is possible to insert the shaft portion 21 into the cylindrical portion 18 even with a low load. Thus, as shown in FIG. 3, the load for coupling the input shaft 13 to the middle shaft 12 temporarily increases at the time when the snap ring 26 is compressed by the coupling taper face 33a. After that, the load becomes a low load.

In the separating work, the separation nut 42 is rotated to rotate and move toward the middle shaft 12. Thus, the separation nut 42 pushes the middle shaft 12 (cylindrical portion 18), and a load in the separating direction acts on the middle shaft 12 and the input shaft 13. When the load becomes higher than or equal to the predetermined load, the snap ring 26 is reduced in diameter by the side face 32 and is entirely accommodated in the second engagement groove 25. Thus, the input shaft 13 is removed from the middle shaft 12. As a result, the input shaft 13 and the middle shaft 12 are separated from each other. As in the case where the input shaft 13 and the middle shaft 12 are coupled to each other, after the snap ring 26 is accommodated in the second engagement groove 25, it is possible to remove the shaft portion 21 from the cylindrical portion 18 even with a low load.

Therefore, as shown in FIG. 3, the load for separating the input shaft 13 from the middle shaft 12 temporarily increases at the time when the snap ring 26 is compressed by the separation taper face 32b. After that, it is possible to remove the input shaft 13 from the middle shaft 12 even with a low load. In addition, because the contact angle θ1 at which the snap ring 26 contacts the boundary portion 32c is larger than the contact angle θ2 at which the snap ring 26 contacts the coupling taper face 33a as described above, the load for compressing the snap ring 26 at the time of separating is higher than the load at the time of coupling. Thus, it is possible to easily couple the middle shaft 12 and the input shaft 13 to each other, and it is possible to reliably prevent the input shaft 13 from coming out of the middle shaft 12.

As described above in detail, according to the present embodiment, the following operation and advantageous effects are obtained. (1) There is provided the separation nut 42 that is fitted to the threaded portion formed on the shaft portion 21 and that rotates and moves toward the middle shaft 12 to push the middle shaft 12. Therefore, by rotating and moving the separation nut 42, a load in the separating direction is easily applied to the middle shaft 12 and the input shaft 13. Thus, it is possible to improve the efficiency of the work for separating the middle shaft 12 and the input shaft 13 from each other. Thus, it is possible to provide the steering device 1 having excellent maintainability, which makes it possible to easily perform a separating work even in the case of the column shaft 3 mounted in a limited space in the vehicle.

(2) The elastic member 44 is arranged between the separation nut 42 and the cylindrical portion 18 while being compressed in the axial direction. Due to, for example, the dimensional accuracy of the middle shaft 12 and the input shaft 13, there may be generated an axial gap between these snap ring 26 and the first and second engagement grooves 24 and 25 in a state where the snap ring 26 is engaged with the first and second engagement grooves 24 and 25. In terms of this point, with the above structure, the middle shaft 12 and the input shaft 13 are pushed by the elastic force of the elastic member 44 in the separating direction and therefore the snap ring 26 is clamped from both axial sides between the first and second engagement grooves 24 and 25. Thus, the gap between the snap ring 26 and the first and second engagement grooves 24 and 25 is eliminated, and, for example, occurrence of noise is suppressed.

(3) The restricting portion 43 that restricts rotation and movement of the separation nut 42 in a direction away from the middle shaft 12 is formed on the shaft portion 21. Therefore, it is possible to prevent the separation nut 42 from moving away from the cylindrical portion 18 due to, for example, vibrations caused by a travel motion of the vehicle. Particularly, in the structure in which the elastic member 44 is arranged, in a compressed state, between the separation nut 42 and the cylindrical portion 18 as in the present embodiment, it is possible to maintain the elastic force of the elastic member 44 by restricting the movement of the separation nut 42. Therefore, it is possible to suppress formation of an axial gap between the snap ring 26 and the first and second engagement grooves 24 and 25 for a long period of time.

(4) The side face 32 of the first engagement groove 24 is formed of the orthogonal face 32a and the separation taper face 32b, and the boundary portion 32c between the orthogonal face 32a and the separation taper face 32b is in contact with the snap ring 26.

With the above structure, when the snap ring 26 is reduced in diameter and the input shaft 13 is axially moved even slightly relative to the middle shaft 12, the snap ring 26 moves onto the separation taper face 32b and then the contact angle reduces. Therefore, it is possible to reduce the duration in which a high load is required to separate the middle shaft 12 and the input shaft 13 from each other. Therefore, in comparison with the case where the entirety of the side face 32 is formed in a tapered shape, even if a load required to separate the middle shaft 12 and the input shaft 13 from each other is set to a high load, it is possible to easily separate the middle shaft 12 and the input shaft 13 from each other.

In order to further reliably prevent the input shaft 13 from being removed from the middle shaft 12, the middle shaft 12 and the input shaft 13 may be fastened to each other with a retaining bolt (second embodiment). For example, as shown in FIG. 4, a shaft-shaped protruding portion 51 is formed at the distal end of the shaft portion 21, and a bolt hole 52 is formed in the protruding portion 51 so as to extend in the radial direction of the protruding portion 51. In addition, a through-hole 53 that extends through the cylindrical portion 18 in the radial direction is formed at a position corresponding to the bolt hole 52 of the protruding portion 51. Then, a retaining bolt 54 is fitted in the bolt hole 52 via the through-hole 53 to fasten the middle shaft 12 to the input shaft 13.

With this structure, axial movement of the input shaft 13 relative to the middle shaft 12 is sufficiently restricted by the retaining bolt 54 to prevent the input shaft 13 from being removed from the middle shaft 12. In addition, the inner peripheral surface of the cylindrical portion 18 and the outer peripheral surface of the shaft portion 21 are brought into tight contact with each other by the fastening force of the retaining bolt 54. Therefore, it is possible to suppress rattle in the radial direction between the middle shaft 12 and the input shaft 13.

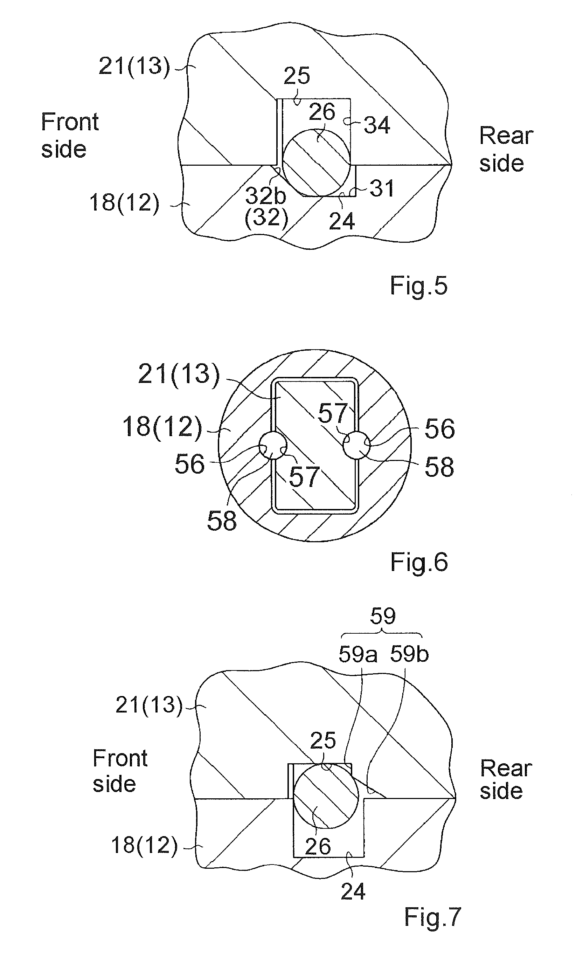

In the above-described embodiment, the side face 32 of the first engagement groove 24 is formed of the orthogonal face 32a and the separation taper face 32b. However, the structure is not limited to this. For example, the side face 32 may be formed of two separation taper faces having different inclination angles. In addition, for example, as shown in FIG. 5, the entirety of the side face 32 may be formed of the separation taper face 32b (third embodiment).

In the above-described embodiment, by serration-fitting the shaft portion 21 to the cylindrical portion 18, the middle shaft 12 and the input shaft 13 are coupled to each other such that torque is transmittable therebetween. However, the structure is not limited to this. As long as the shaft portion 21 is circumferentially engaged with the cylindrical portion 18 such that torque is transmittable therebetween, the middle shaft 12 may be coupled to the input shaft 13 in any manner. For example, as shown in FIG. 6, two guide grooves 56 and two guide grooves 57 may be respectively formed on the inner peripheral surface of the cylindrical portion 18 and the outer peripheral surface of the shaft portion 21 so as to extend in the axial direction, and a plurality of balls 58 may be interposed between these guide grooves 56 and 57 so that torque is transmittable between the cylindrical portion 18 and the shaft portion 21 via the balls 58 (fourth embodiment). Note that, in the structure shown in FIG. 6, the shaft portion 21 is formed in a rectangular shape in cross section. In addition, the number of the guide grooves 56 formed in the cylindrical portion 18 and the number of the guide grooves 57 formed in the shaft portion 21 each are not limited to two and may be three or more.

In the above-described embodiment, the snap ring 26 engages with both the first and second engagement grooves 24 and 25 with the diameter of the snap ring 26 reduced from that in a free state, and a load in the separating direction is applied to further reduce the snap ring 26 in diameter to thereby disengage the snap ring 26 from the first engagement groove 24. However, the structure is not limited to this. As shown in FIG. 7, the snap ring 26 may engage with both the first and second engagement grooves 24 and 25 with the diameter of the snap ring 26 increased from that in the free state, and the load in the separating direction is applied to further increase the snap ring 26 in diameter to thereby disengage the snap ring 26 from the second engagement groove 25 (fifth embodiment). Note that, in the structure shown in FIG. 7, the depth of the first engagement groove 24 is larger than the diameter of the snap ring 26 in cross section. In addition, the depth of the second engagement groove 25 is smaller than the diameter of the snap ring 26 in cross section, and a side face 59 of the second engagement groove 25 is formed of an orthogonal face 59a and a separation taper face 59b that reduces in diameter from the orthogonal face 59a toward the rear of the vehicle.

In addition, the snap ring 26 may engage with both the first and second engagement grooves 24 and 25 as shown in FIG. 2 or FIG. 7 in a free state where the snap ring 26 is not elastically deformed.

In the above-described embodiment, the input shaft 13 is coupled to the middle shaft 12 that is coupled to the upper shaft 11. However, the structure is not limited to this. For example, the input shaft 13 may be directly coupled to the coupling end portion 15 of the upper shaft 11.

In the above-described embodiment, the variable transmission ratio device 7 is provided at an intermediate portion of the column shaft 3, and the invention is applied to the coupling structure for coupling the middle shaft 12 and the input shaft 13 to each other. However, the structure to which the invention is applied is not limited to this. For example, the invention may be applied to a coupling structure for coupling the column shaft 3 and a shaft of an EPS (Electric Power Steering) actuator that rotates the column shaft 3 using a motor as a driving source. In addition, the shaft to which the invention is applied is not limited to the column shaft 3. The invention may be applied to a coupling structure for coupling shafts other than the column shaft 3 to each other.

## Claims

1. A coupling structure for coupling a first rotary member that has a cylindrical portion to a second rotary member that has a shaft portion that is fitted to the cylindrical portion such that torque is transmittable between the first rotary member and the second rotary member, wherein:
engagement grooves that extend in a circumferential direction are formed respectively in an inner peripheral surface of the cylindrical portion and an outer peripheral surface of the shaft portion;
a snap ring is provided between the cylindrical portion and the shaft portion, and engages with both of the engagement grooves to restrict axial movement of the second rotary member relative to the first rotary member;
the engagement grooves are formed such that engagement of the snap ring with one of the engagement grooves is released when a load higher than or equal to a predetermined load is applied to the first rotary member and the second rotary member in such a direction that the first rotary member and the second rotary member are separated from each other; and
there is provided a separation nut that is fitted to a threaded portion formed on the shaft portion and that rotates and moves toward the first rotary member to push the first rotary member.

2. The coupling structure according to claim 1, further comprising:
an elastic member that is arranged between the separation nut and the cylindrical portion while being compressed in an axial direction.

3. The coupling structure according to claim 1 or 2, wherein
the shaft portion has a restricting portion that restricts rotation and movement of the separation nut in a direction away from the first rotary member.

4. A steering device comprising a steering shaft that is formed by coupling a plurality of shafts using the coupling structure according to any one of claims 1 to 3.
